# EUROPÄISCHE PATENTSCHRIFT

(11) **EP 1 434 680 B1**
(45) Veröffentlichungstag und Bekanntmachung des Hinweises auf die Patenterteilung: **05.07.2006**
(21) Anmeldenummer: 02787484.1
(22) Anmeldetag: 11.10.2002
(51) Int. Cl.: B29C 47/76, B29C 47/42, B29C 47/38

(54) **EXTRUDER ZUR GEWINNUNG VON KUNSTSTOFF-SCHMELZEN**
EXTRUDER FOR PRODUCING MOLTEN PLASTIC MATERIALS
EXTRUDEUSE PERMETTANT DE PRODUIRE DES MATIERES FONDUES PLASTIQUES

(30) Priorität: 12.10.2001 DE 10150627
(43) Veröffentlichungstag der Anmeldung: 07.07.2004
(73) Patentinhaber: GNEUSS KUNSTSTOFFTECHNIK GmbH, D-32549 Bad Oeynhausen (DE); Reifenhäuser GmbH & Co. Maschinenfabrik, 53844 Troisdorf (DE)
(72) Erfinder: GNEUSS, Detlef, 32545 Bad Oeynhausen (DE); WALACH, Wieslaw, 53842 Troisdorf (DE)
(74) Vertreter: Grosse, Wolf-Dietrich Rüdiger
(86) Internationale Anmeldenummer: PCT/EP2002/011391
(87) Internationale Veröffentlichungsnummer: WO 2003/033240

(56) Entgegenhaltungen:
- WO-A-01/62469
- DE-A- 19 607 662
- DE-C- 4 001 986
- DE-C- 10 020 646
- US-A- 5 106 198

## Beschreibung

Die Erfindung betrifft einen Extruder zur Gewinnung von Schmelzen aus handelsüblichem Kunststoffgranulat durch Erhitzen und Durchwalken des Granulates mittels von beheizten Ein- oder Doppelschneckenextrudem und zur Polykondensation bzw. Polymerisation unter Zuhilfenahme eines Mehrschneckenextruderteils unter Benutzung evakuierter Kammern zum Entzug von niedermolekularen Bestandteilen und/oder Schäummitteln oder dergleichen sowie zum Erreichen höherer Molekülgrößen und damit höherer Viskosität sowie zur Erhöhung der mechanischen Belastbarkeit des aus der Schmelze erzeugten Kunststoffes.

Ein Mehrschyeckenextruder zur Entgasung von Kunststoffschmelzen ist aus der US-A-5 106 198 bekannt.

Handelsübliches Kunststoffgranulat lässt sich in einem Einschneckenextruder zu einer Schmelze verarbeiten, die beispielsweise zum Spritzen von Kunststoffgegenständen, aber auch zum Ziehen von Fäden geeignet ist. Dünne Kunststofffolien jedoch benötigen einen zäheren und belastungsfähigeren Rohstoff für ihre Weiterverarbeitung. Dazu ist es bekannt, den Einschneckenextruder an Entgasungseinrichtungen, wie sie durch die EP 0 588 998 A1 zum Stand der Technik gehören, anzuschließen, wo durch passieren der Kunststoffschmelze durch evakuierter Räume derartige Rohstoffe erhalten werden können. Der Entzug von niedermolekularen Bestandteilen, wie z.B. Glykol oder dergleichen lässt sich hier durch längere Verweilzeiten dünner Schmelzeschichten in evakuierten Kammern erreichen. Ähnliche Entgasungseinheiten sind z.B. der DE 100 20 646 C1 oder der DE 40 01 986 C1 zu entnehmen. Bei den hier beschriebenen Anordnungen macht sich allerdings der relativ komplizierte Aufbau der Aggregate, bei denen Spindeln ineinander kämmen, ebenso nachteilig bemerkbar wie der relativ hohe Gestehungspreis des Extruders und der Entgasungseinheit.

Die vorliegende Erfindung geht daher von der Aufgabe aus, einen Extruder mäßigen Aufwandes und verhältnismäßig einfachen Aufbaues zu schaffen, der es erlaubt, die Schmelze in dünnen Schichten, die dem Vakuum große Kontaktflächen bietet, zu verarbeiten und damit mit einfachen Mitteln eine Kunststoffschmelze zu liefern, die eine beliebige Entgasung und Polymerisation erlaubt.

Gelöst wird diese Aufgabe mit den Maßnahmen des Patentanspruches 1. Dadurch, dass die Hüllkurven der Schneckenspindeln mit einem Abstand zueinander bzw. zu ihnen umgebenden Teilen ≥ 0 angeordnet sind, d. h. dass die Schneckenspindein weder untereinander kämmen noch gegenüber der Extruderschnecke bzw. deren Wellenabschnitt kämmen und auch nicht mit den sie umgebenden Zylinderbereichen kämmen, lassen sich die Schnecken mit unterschiedlichen Drehzahlen zur Erzeugung optimaler Fördergeschwindigkeiten antreiben. Wesentlich für den Transport der Schmelze ist, dass sich Relativbewegungen zwischen den Schneckenspindeln untereinander und/oder zwischen den Schneckenspindeln und dem Gehäuse und/oder zwischen den Schneckenspindein und der Extruderschnecke bzw. deren Wellenabschnitt ergeben.

Hinzu kommt, dass die Spindeln und auch das Gehäuse nicht so aufwendig bearbeitet werden muss, wodurch sich Kostenvorteile bei der Erstellung ergeben. Durch das Fehlen der Verzahnung wird zudem erreicht, dass sich mehr freie Flächen zwischen den Schneckenspindeln sowie zwischen Schneckenspindeln und dem sie umgebenden Gehäuse und Extruderschneckenteilen ergeben, so dass auch Verunreinigungen in der Schmelze, die bei untereinander kämmenden Spindeln und ggf. mit dem Gehäuse kämmenden Spindeln zu Beschädigungen am Mehrschneckenextruderteil führen können, hier noch problemlos verarbeitbar sind, ohne dass es zu Beschädigungen und allzu großem Verschleiß kommt.

Ein weiterer Vorteil besteht darin, dass die Schnecken durch das fehlende Kämmen unterschiedliche Steigungen aufweisen können, wodurch sich die Verweilzeiten im Mehrschneckenextruderteil sowie die Transportgeschwindigkeiten beeinflussen lassen.

Es hat sich bewährt, den Mehrschneckenextruderteil nach den Merkmalen des Anspruchs 2 auszubilden. Dadurch lassen sich durch die Extruderschnecke bzw. deren Wellenabschnitt die Schneckenspindeln des Mehrschneckenextruderteils problemlos antreiben. Dadurch wird erreicht, dass nur ein Antrieb für die Plastifiziereinheit sowie für den Mehrschneckenextruderteil benötigt wird.

Werden die Schneckenspindeln, wie in Anspruch 3 vorgeschlagen, in Führungskörper eingebaut, so kann dieser feststehend zum Mantel angeordnet sein, so dass sich lediglich die Schneckenspindeln im Führungskörper drehen. Es besteht aber auch die Möglichkeit, dass der Führungskörper im Mantel selbst geführt ist und sich die Schneckenspindeln im Führungskörper drehen und dieser sich dabei noch selbst im Mantel 5 drehbewegt.

Von Vorteil ist aber auch, wenn der Führungskörper fest mit dem Wellenabschnitt verbunden ist und die an den Enden der Zahnspindeln angeordneten Zahnräder in Zahnkränzen des Mantels ablaufen.

Eine weitere Möglichkeit besteht nach Anspruch 6 darin, die gezahnten Zapfen der Schneckenspindeln nicht nur mit dem Zahnring sondern auch mit einem Zahnkranz kämmen zu lassen. Dadurch erhalten die Zahnspindeln eine eigene Rotation und rotieren zusätzlich noch um den Wellenabschnitt.

Werden verschiedene Zahnringe und/oder Zahnkränze im Mehrschneckenextruderteil vorgesehen, so lassen sich, je nach dem wie die Übersetzungsverhältnisse sind, unterschiedliche Schneckenspindeln mit unterschiedlichen Geschwindigkeiten antreiben. Eine weitere Möglichkeit besteht selbstverständlich darin, jedem Zahnkranz einen Motor, der in seiner Geschwindigkeit regelbar ist, zuzuordnen, um so die Schneckenspindeln geregelt drehantreiben zu können.

Weitere, vorteilhafte und empfehlenswerte Ausgestaltungen sind den Unteransprüchen 12 bis 17 entnehmbar.

Erläutert wird die Erfindung durch die Beschreibung von Ausführungsbeispielen von Schneckenextrudem in Verbindung mit sie darstellenden Zeichnungen. Dabei zeigen:
- Fig. 1: einen kombinierten Ein- und Mehrschneckenextruder mit abgebrochen dargestellten Spindelbereichen,
- Fig. 2: den Querschnitt des als Mehrschneckenextruder ausgebildeten Abschnittes des Extruders gemäß Fig. 1,
- Fig. 3: den Querschnitte des als Mehrschneckenextruder ausgebildeten Abschnittes des Extruders gemäß einer zweiten Version, und
- Fig. 4: den Querschnitte des als Mehrschneckenextruder ausgebildeten Abschnittes des Extruders gemäß einer dritten Version.

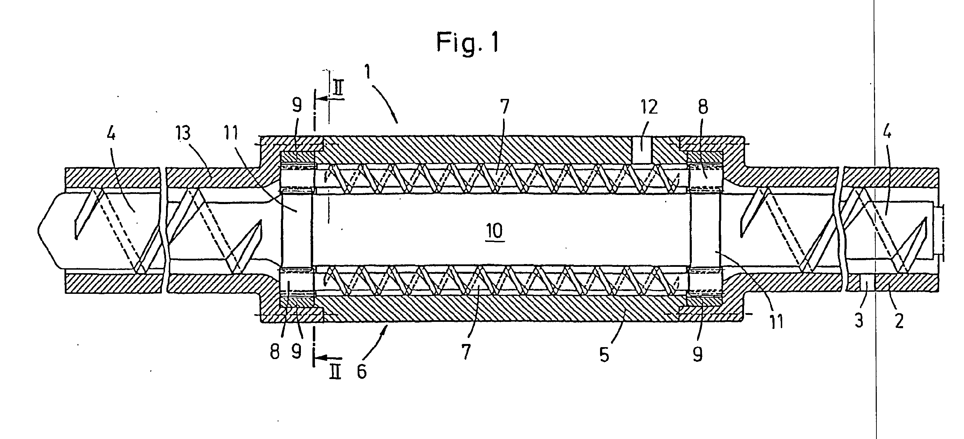

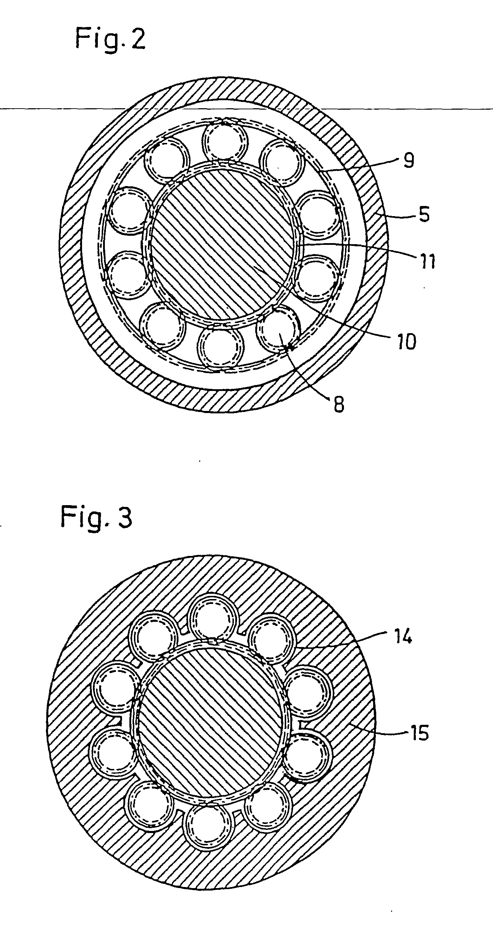

In Fig. 1 ist ein Extruder 1 gezeigt, dessen Gehäuse 2 mit einem zusätzlichen Einführungskanal 3 für eine etwaige Zudosierung von Zuschlagstoffen ausgestattet ist und der eine am rechten Ende abgebrochen dargestellte und an diesem vermittels nicht gezeigter Antriebsvorrichtungen angetriebene Extruderschnecke 4 aufweist. An das Gehäuse 2 ist der Mantel 5 eines Mehrschneckenextruderteils 6 angefügt, oder das Gehäuse 2 geht gestuft in den Mantel 5 eines Mehrschnekkenextruderteils 6 über. Im Mehrschneckenextruderteil 6 sind mehrere, im Ausführungsbeispiel zehn (siehe Fig. 2), achsparallel angeordnete Schneckenspindein 7 vorgesehen, die je beidendig mit gezahnten Zapfen 8 ausgestattet sind. Sie greifen jeweils in eine Innenverzahnung des Mantels 5 ein. Im Ausführungsbeispiel (Fig. 1) sind in den Mantel 5 beidendig je ein innenverzahnter Zahnkranz 9 oder ein ähnliches Führungsteil, welches die Führung übemimmt eingelegt, befestigt bzw. sind mit diesem einstückig ausgeformt. Die Extruderschnecke 4 durchgreift den Mantel 5 mit einem Wellenabschnitt 10, auf dem beidendig eine Außenverzahnung aufweisende Zahnringe 11 drehfest angeordnet sind. Der Wellenabschnitt 10 kann, wie Fig. 1 zeigt, zylindrisch ausgestaltet sein. Es besteht aber durchaus die Möglichkeit; hier eine Wendel zum axialen Vorschub der Schmelze vorzusehen. Der Mantel 5 ist mit einem Vakuumkanal 12 ausgestattet der mit einer nicht dargestellten Vakuumpumpe, z.B. einer Gaedepumpe oder einer Diffusionspumpe, verbunden ist.

Ausgangsseitig abgeschlossen wird der Mantel 5 durch einen Endabschnitt 13, der von dem Endabschnitt der Extruderschnecke 4 durchgriffen wird.

Die Schneckenspindeln 7 erreichen bzw. tangieren mit ihren Gängen jeweils die Oberfläche des zylindrisch ausgeformten Wellenabschnittes 10 bzw. die äußere Oberfläche (Hüllkurve) des als Wendel ausgebildeten Wellenabschnittes 10.

### Damit wird folgende Betriebsweise erreicht:

Beim Antreiben der Extruderschnecke 4 wird über den Einführungskanal 3 zugeführtes Kunststoffgranulat erfasst, beispielsweise an der beheizten Wandung des Gehäuses 2 aufgeschmolzen und durch die Schneckenwindungen der angetriebenen Extruderschnecke 4 in Richtung auf den ringförmigen Mehrschneckenextruderteil 6 hin bewegt und in diesen eingeführt. Die Ausführung der Extruderschnecke 4 entspricht einer auf den zu verarbeitenden Rohstoff abgestimmten Extruderschnecke, wobei in Fig. 1 die Ganghöhe der Schneckenwindungen als ein mögliches Ausführungsbeispiel in Richtung auf den Mehrschneckenextruderteil 6 hin abnimmt und damit einerseits dem beim Aufschmelzen abnehmenden Volumen entspricht, aber andererseits den vom Mehrschneckenextruderteil 6 benötigten Arbeitsdruck zur Verfügung stellt. Im Mehrschneckenextruderteil 6 selbst werden die Schneckenspindeln 7 mit ihren gezahnten Zapfen 8 über die beiden drehfest mit dem Wellenabschnitt 10 der Extruderschnecke 4 verbundenen Zahnringe 11 angetrieben. Die gezahnten Zapfen 8 greifen weiterhin in die feststehenden Zahnkränze 9 ein, so dass die Schneckenspindeln 7 nicht nur um ihre Achse sondern auch um die Achse des Wellenabschnitts 10 der Extruderschnecke 4 rotieren. Die sich drehenden Schneckenspindein 7 laufen hierbei, mit ihren Schnekkenscheiteln annähernd tangierenden auf dem Wellenabschnitt 10 der Extruderschnecke 4 ab, und die dünn ausgewalkte Schmelze vermag Gase in den evakuierten, vom Mantel 5 umschlossenen Raum abzugeben, die dann über den Vakuumkanal12 mittels einer Pumpe entnommen wird.

Um die den Mehrschneckenextruderteil 6 durchsetzende Schmelze möglichst dünnwandig zu halten, zeigt Fig. 3 eine Alternative, nach der die Schneckenspindeln 7 in Ausnehmungen 14 von Führungskörpern 15 gehalten werden. Die Ausnehmungen 14 sind an die Umfangsform der Schneckenspindeln 7 angepasst, so dass hier die Schmelzeschicht dünnwandig gehalten wird. Die Schneckenspindeln 7 nach Fig. 3 kämmen nicht mit Zahnkränzen 9, sondern sind in den feststehenden Führungskörpern 15 so gehalten, dass sie nur um ihre Achse rotieren.

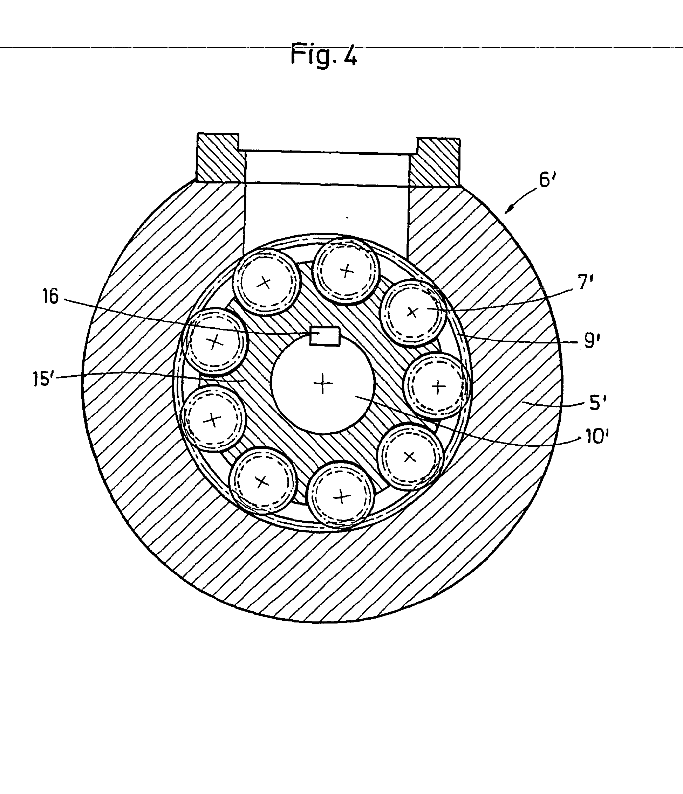

Figur 4 zeigt einen Mehrschneckenextruderteil 6', der mit neun Schneckenspindeln 7' ausgestattet ist. Die Schneckenspindeln 7' sind in einem Führungskörper 15' gelagert, welcher über einen Mitnehmer 16 drehfest mit dem Wellenabschnitt 10' verbunden ist.

Die gezahnten Zapfen der Schneckenspindeln 7' greifen in einen Zahnkranz 9', der am Gehäuse 5' befestigt ist ein. Durch Drehbewegung des Wellenabschnitts 10' wird der Führungskörper 15` ebenfalls in Drehbewegung versetzt. Die im Führungskörper 15' gelagerten Schneckenspindeln 7' laufen dabei am Zahnkranz 9' ab und werden dadurch neben der Drehbewegung um den Wellenabschnitt 10' auch noch in Drehbewegung um sich selbst versetzt.

Werden hier (nicht gezeigt) unterschiedliche Zahnkränze 9' vorgesehen, die mit unterschiedlichen gezahnten Zapfen kämmen, lassen sich, je nach dem wie die Übersetzungsverhältnisse liegen, unterschiedliche Geschwindigkeiten für die Schneckenspindeln 7' erreichen.

Am Ausgang des ringförmigen Mehrschneckenextruderteils 6 setzt sich die Extruderschnecke 4 mit ihrem Endbereich fort. Auch hier ist zunächst eine relativ hohe Ganghöhe der Schneckenwindungen vorgesehen, die durch Verstärkung des Kemdurchmessers zum freien Ende hin abflacht.

### Bezugszeichenübersicht

- 1: Extruder
- 2: Gehäuse
- 3: Einführungskanal
- 4: Extruderschnecke
- 5: Mantel
- 6: Mehrschneckenextruderteil
- 7: Schneckenspindeln
- 8: Gezahnte Zapfen
- 9: Zahnkranz
- 10: Wellenabschnitt
- 11: Zahnringe
- 12: Vakuumkanal
- 13: Endabschnitt
- 14: Ausnehmungen
- 15: Führungskörper
- 16: Mitnehmer

## Patentansprüche

1. Extruder zur Gewinnung von Schmelzen aus handelsüblichem Kunststoffgranulat durch Erhitzen und Durchwalken des Granulates mittels von beheizten Ein- oder Doppelschneckenextrudem und zur Polykondensation bzw. Polymerisation unter Zuhilfenahme eines Mehrschneckenextruderteils (6) unter Benutzung evakuierter Kammern zum Entzug von niedermolekularen Bestandteilen und/oder Schäummitteln oder dergleichen sowie zum Erreichen höherer Molekülgrößen und damit höherer Viskosität sowie zur Erhöhung der mechanischen Belastbarkeit des aus der Schmelze erzeugten Kunststoffes,
**dadurch gekennzeichnet ,**
**dass** die Hüllkurven der Schneckenspindein (7) zumindest im Polykondensationsbereich des Mehrschneckenextruderteils (6) zueinander, gegenüber der Extruderschnecke (4) bzw. deren Wellenabschitt (10) und gegenüber ihren sie umgebenden Zylinderbereichen größer gleich Null (≥ 0) beabstandet sind.

2. Extruder nach Anspruch 1,
**dadurch gekennzeichnet,**
**dass** sich auf dem Wellenabschnitt (10) mindestens zwei, den Mehrschnekkenextruderteil (6) bildende achsparallel angeordnete Schneckenspindeln (7) abwälzen, wobei jede Schneckenspindel (7) mindestens einen als Zahnrad ausgebildeten Zapfen (8) aufweist, die in mindestens einen Zahnring (11) eingreifen, welcher mit dem Wellenabschnitt (10) der zentralen Extruderschnecke(4) drehfest verbunden ist.

3. Extruder nach Anspruch 2,
**dadurch gekennzeichnet,**
**dass** die Schneckenspindeln (7) in Ausnehmungen (14) von mindestens einem Führungskörper (15) gehalten sind, wobei die Führungskörper (15) am Mantel (5) des Mehrschneckenextruderteil (6) eingebaut oder geführt sind.

4. Extruder nach Ansprüchen 1,
**dadurch gekennzeichnet,**
**dass** auf dem Wellenabschnitt (10) ein Führungskörper (15') drehfest gehalten ist, in dessen Ausnehmungen (14') die Schneckenspindel (7') gelagert sind, deren, als Zahnrad ausgebildeten Zapfen (8') in mindestens einen Zahnkranz (9') eingreifen, welcher mit dem Mantel (5) in Verbindung steht.

5. Extruder nach Anspruch 3 oder 4,
**dadurch gekennzeichnet,**
**dass** die Ausnehmungen (14, 14') so ausgebildet sind, dass der bzw. die Führungskörper (15, 15') die Hüllkurve der Schneckenspindeln (7, 7') in geringem Abstand umgeben

6. Extruder nach Anspruch 2,
**dadurch gekennzeichnet,**
**dass** die Schneckenspindeln (7) beidendig als gezahnte Zapfen (8) ausgebildeten sind, und dass jede Seite der gezahnten Zapfen (8) gemeinsam mit den entsprechenden weiteren gezahnten Zapfen (8) von je einem Zahnkranz (9) oder einem ähnlichen Führungsteil, welches die Führung übernimmt, umfasst sind.

7. Extruder nach Anspruch 4 oder 6,
**dadurch gekennzeichnet,**
**dass** die Zahnkränze (9, 9') mit dem Mantel (5) des Mehrschneckenextruderteils (6) verbunden sind oder deren Zähne in diesen eingearbeitet sind.

8. Extruder nach einem der Ansprüche 2 bis 7,
**dadurch gekennzeichnet,**
**dass** die als Zahnrad ausgebildeten Zapfen (8, 8') verschiedener Schnekkenspindeln (7, 7') in verschiedene Zahnringe (11) und/oder Zahnkränze (9, 9') eingreifen.

9. Extruder nach Anspruch 8,
**dadurch gekennzeichnet,**
**dass** die verschiedenen Zahnringe (11) und/oder Zahnkränze (9, 9') mit den als Zahnrad ausgebildeten Zapfen (8, 8') unterschiedliche Übersetzungsverhältnisse aufweisen.

10. Extruder nach Anspruch 8 oder 9,
**dadurch gekennzeichnet,**
**dass** für jede Schneckenspindel (7, 7') ein unterschiedlicher Zahnring (11) und/oder Zahnkranz (9, 9') vorgesehen ist.

11. Extruder nach Anspruch 8,
**dadurch gekennzeichnet,**
**dass** die verschiedenen Zahnkränze (9, 9') im Mantel (5) drehbar geführt und von Motoren antreibbar sind.

12. Extruder nach einem der Ansprüche 1 bis 11,
**dadurch gekennzeichnet,**
**dass** der Mantel (5) des Mehrschneckenextruderteils (6) mit einem Vakuumkanal (12) zum Anschluß an einer Vakuumpumpe ausgestattet ist.

13. Extruder nach einem der Ansprüche 1 bis 3,
**dadurch gekennzeichnet,**
**dass** der Wellenabschnitt (10) zylindrische Form aufweist.

14. Extruder nach einem der Ansprüche 1 bis 3,
**dadurch gekennzeichnet ,**
**dass** der Wellenabschnitt (10) mindestens eine Wendel aufweist, über welche die Schmelze in oder entgegen der Förderrichtung der Extruderschnekke (4) in axialer Richtung förderbar ist.

15. Extruder nach Anspruch 14,
**dadurch gekennzeichnet,**
**dass** die Zahnringe (11) von der Wendel gebildet werden.

16. Extruder nach einem der Ansprüche 2 bis 15,
**dadurch gekennzeichnet ,**
das die Verzahnungen zwischen den gezahnten Zapfen (8) und den Zahnkränzen (9, 9') bzw. den Zahnringen (11) als gerade und/oder als schräge Verzahnungen ausgeführt sind.

17. Extruder nach einem der Ansprüche 2 bis 16,
**dadurch gekennzeichnet,**
**dass** die Schnecken der Schneckenspindeln (7, 7') unterschiedliche Steigungen aufweisen

## Claims

1. An extruder for obtaining charges from commercial plastic granulate by heating and full welling the granulate by means of heated single or double screw extruders and for polycondensation or polymerisation by means of a multi-screw extruder section (6) using evacuated chambers for withdrawing low molecular components and/or foaming agents or the like, and for obtaining higher molecule sizes and hence higher viscosity, as well as for increasing the mechanical loading capacity of the plastic produced from the charge, **characterised in that** the envelopes of the screw are separated from one another, from the extruder screw (4) or its shaft section (10), and from its cylindrical areas surrounding it, by a distance greater than or equal to zero (≥ 0).

2. The extruder according to Claim 1, **characterised in that** at least two screw spindles (7) forming the multi-screw extruder section (6) and arranged in parallax are rolled together on the shaft section (10), wherein each screw spindle (7) has at least one pin (8) designed as a gear wheel, which pin engage in at least one toothed ring (11) which is rigidly connected to the shaft section (10) of the central extruder screw (4).

3. The extruder according to Claim 2, **characterised in that** the screw spindles (7) are retained in recesses (14) of at least one guide body (15), wherein the guide bodies (15) are installed or guided on the jacket (5) of the multi-screw extruder section (6).

4. The extruder according to Claim 1, **characterised in that** a guide body (15') is rigidly retained on the shaft section (10), in the recesses (14') of which body are mounted the screw spindles (7') whose pins 98'), designed as a gear wheel, engage in at least one crown gear (9'), which connects to the jacket (5).

5. The extruder according to Claim 3 or 4, **characterised in that** the recesses (14, 14') are designed so that the guide body or bodies (15, 15') surround the envelope of the screw spindles (7, 7') at a short distance.

6. The extruder according to Claim 2, **characterised in that** the screw spindles (7) are designed at both ends as toothed pins (8), and **in that** each side of the pins (8) are enclosed together with the corresponding wider toothed pins (8) by a crown gear (9) or a similar guide part which performs the guiding action.

7. The extruder according to Claim 4 or 6, **characterised in that** the crown gears (9, 9') are connected to the jacket (5) of the multi-screw extruder section (6) or its teeth are incorporated in it.

8. The extruder according to Claims 2 to 7, **characterised in that** the pins (8, 8') of different screw spindles (7, 7'),designed as a gear wheel, engage in different toothed rings (11) and/or crown gears (9, 9').

9. The extruder according to Claim 8, **characterised in that** the different toothed rings (11) and/or crown gears (9, 9'), with the pins (8, 8') designed as a gear wheel, have different reduction ratios.

10. The extruder according to Claim 8 or 9, **characterised in that** a different toothed ring (11) and/or crown gear (9, 9') is provided for each screw spindle (7, 9').

11. The extruder according to Claim 8, **characterised in that** the different crown gears (9, 9') are rotatably guided in the jacket (5) and can be driven by motors.

12. The extruder according to one of Claims 1 to 11, **characterised in that** the jacket (5) of the multi-screw extruder section (6) is equipped with a vacuum duct (12) for connection to a vacuum pump.

13. The extruder according to one of Claims 1 to 3, **characterised in that** the shaft section (10) is cylindrical in shape.

14. The extruder according to one of Claims 1 to 3, **characterised in that** the shaft section (10) has at least one coil by which the charge can be conveyed in or against the direction of conveying of the extruder screw (4) in the axial direction.

15. The extruder according to Claim 14, **characterised in that** the toothed rings (11) are formed by the coil.

16. The extruder according to one of Claims 2 to 15, **characterised in that** the gear teeth between the toothed pin (8) and the crown gears (9, 9') or the toothed rings (11) are designed as straight and/or as bevel gear teeth.

17. The extruder according to one of Claims 2 to 16, **characterised in that** the screws of the screw spindles (7, 7') have different pitches.

## Revendications

1. Extrudeuse pour produire de la matière fondue à partir de granulés de matière plastique disponibles dans le commerce, par échauffement et foulage à fond du granulé au moyen d'extrudeuses à une ou à deux vis sans fin chauffées et pour la polycondensation ou la polymérisation en ayant recours à un élément d'extrudeuse à vis sans fin multiples (6), en utilisant des chambres évacuées pour l'extraction de composants de faible poids moléculaire et/ou d'agents moussants ou similaires et pour l'obtention d'importantes dimensions moléculaires et donc d'une viscosité accrue, ainsi que pour l'augmentation de la capacité de charge mécanique de la matière plastique générée à partir de la matière fondue
**caractérisée en ce que**
au moins dans la zone de polycondensation de l'élément d'extrudeuse à vis sans fin multiples (6), les enveloppantes des broches de vis sans fin (7) sont distancées d'une valeur supérieure ou égale à zéro (≥ 0) entre elles, par rapport à la vis de l'extrudeuse (4) ou par rapport au tronçon d'arbre de cette dernière (10) et par rapport aux zones de cylindre qui les entourent.

2. Extrudeuse selon la revendication 1,
**caractérisée en ce qu'**aux moins deux broches de vis (7) disposées de façon parallèle à l'axe, formant l'élément d'extrudeuse à vis multiples (6) roulent sur le tronçon d'arbre (10), chaque broche de vis sans fin (7) comportant au moins un tourillon (8) conçu en tant que roue dentée, qui s'engage dans au moins un anneau denté (11) qui est relié de façon solidaire en rotation avec le tronçon d'arbre (10) de la vis d'extrudeuse centrale (4).

3. Extrudeuse selon la revendication 2,
**caractérisée en ce que** les broches de vis sans fin (7) sont maintenues dans des évidements (14) d'au moins un organe de guidage (15), les organes de guidage (15) étant encastrés ou guidés sur l'enveloppe (5) de l'élément d'extrudeuse à vis sans fin multiples (6).

4. Extrudeuse selon la revendication 1,
**caractérisée en ce qu'**un organe de guidage (15') dans les évidements (14') duquel sont logées les broches des vis dans fin (4') dont les tourillons (8') conçus en tant que roue dentée s'engagent dans au moins une couronne dentée (9') qui est en liaison avec l'enveloppe (5) est maintenu de façon solidaire en rotation sur le tronçon d'arbre (10).

5. Extrudeuse selon la revendication 3 ou 4,
**caractérisée en ce que** les évidements (14, 14') sont conçus de façon à ce que l'organe ou les organes de guidage (15, 15') entourent l'enveloppante des broches des vis sans fin (7, 7') à une faible distance.

6. Extrudeuse selon la revendication 2,
**caractérisée en ce que** les broches de vis sans fin (7) sont conçues sur leurs deux extrémités en tant que tourillons dentés (8) et **en ce que** chaque côté des tourillons dentés (8) est entouré en commun avec les autres tourillons dentés correspondants (8) chacun par une couronne dentée (9) ou par un élément de guidage analogue, qui assure le guidage.

7. Extrudeuse selon la revendication 4 ou 6,
**caractérisée en ce que** les couronnes dentées (9, 9') sont reliées avec l'enveloppe (5) de l'élément d'extrudeuse à vis multiples (6) ou **en ce que** leurs dents sont incorporées dans cette dernière.

8. Extrudeuse selon l'une quelconque des revendications 2 à 7,
**caractérisée en ce que** les tourillons (8, 8') conçus en tant que roues dentées de différentes broches de vis sans fin (7, 7') s'engagent dans différentes anneaux dentés (11) et/ou couronnes dentées (9, 9').

9. Extrudeuse selon la revendication 8,
**caractérisée en ce que** les différents anneaux dentés (11) et/ou couronnes dentées (9, 9') présentent différents rapports de transmission avec les tourillons (8, 8') conçus en tant que roues dentées.

10. Extrudeuse selon la revendication 8 ou 9,
**caractérisée en ce que** pour chaque broche de vis sans fin (7, 7'), on a prévu un anneau denté différent (11) et/ou une couronne dentée différente (9, 9').

11. Extrudeuse selon la revendication 8,
**caractérisée en ce que** les différentes couronnes dentées (9, 9') sont guidées de façon rotative dans l'enveloppe (5) et peuvent être entraînées par des moteurs.

12. Extrudeuse selon l'une quelconque des revendications 1 à 11,
**caractérisée en ce que** l'enveloppe (5) de l'élément d'extrudeuse à vis multiples (6) est équipée d'une colonne à vide (12) destinée à être raccordée sur une pompe à vide.

13. Extrudeuse selon l'une quelconque des revendications 1 à 3,
**caractérisée en ce que** le tronçon d'arbre (10) a une forme cylindrique.

14. Extrudeuse selon l'une quelconque des revendications 1 à 3,
**caractérisée en ce que** le tronçon d'arbre (10) comporte au moins une hélice par l'intermédiaire de laquelle la matière fondue peut être transportée en direction axiale, dans la direction de transport de la vis sans fin de l'extrudeuse (4) ou à l'encontre de cette dernière.

15. Extrudeuse selon la revendication 14,
**caractérisée en ce que** les anneaux dentés (11) sont formés par l'hélice.

16. Extrudeuse selon l'une quelconque des revendications 2 à 15,
**caractérisée en ce que** les dentures entre les tourillons dentés (8) et les couronnes dentées (9, 9') ou les anneaux dentés (11) sont conçues en tant que dentures droites et/ou inclinées.

17. Extrudeuse selon l'une quelconque des revendications 2 à 16,
**caractérisée en ce que** les vis sans fin des broches de vis sans fin (7, 7') ont des pas différents.
